# EUROPEAN PATENT APPLICATION

(11) **EP 4 589 182 A1**
(43) Date of publication of application: **23.07.2025**
(21) Application number: 23865003.0
(22) Date of filing: 07.06.2023
(51) Int. Cl.: F16K 11/056, F16K 11/07

(54) **FLOW PATH SWITCHING VALVE**

(30) Priority: 13.09.2022 JP 2022145623
(71) Applicant: Fujikoki Corporation, Tokyo 158-0082 (JP)
(72) Inventor: KONDO, Daisuke, Tokyo 158-0082 (JP)
(74) Representative: Ter Meer Steinmeister & Partner
(86) International application number: PCT/JP2023/021262
(87) International publication number: WO 2024/057639

(57) **Abstract**

A flow path switching valve has a valve unit including: a valve main body having a first port and a second port formed in a valve chamber, and a third port formed at a bottom surface of the valve chamber; a first valve body disposed rotatably in the valve chamber, and in which a flow path is formed; a first flow path communicating with the first port; a second flow path provided parallel with the first flow path with the valve main body interposed between the first flow path and the second flow path, and communicating with the second port, a branch part communicating with the third port and branching at least in two directions; a third flow path and a fourth flow path each coupled to the branch part; and a second valve body disposed in the branch part and which rotates in conjunction with the first valve body. A communication state of the first port, the second port, and the third port is selectively switched through the first valve body, and a communication state of the third port, the third flow path, and the fourth flow path is switched by the second valve body.

## Description

### Technical Field

The present disclosure relates to a flow path switching valve.

### Background Art

Specification of Chinese Patent Application Publication No. 111828682 discloses a control valve (flow path switching valve) having a first valve body that rotates in a valve main body and having five or more ports (pipe joints).

### SUMMARY OF INVENTION

### Technical Problem

However, in the above-described conventional example, since the number of coupling ports and a combination of flow paths are fixed according to a specification, there is no degree of freedom, and it is considered that it is necessary to start over from the design when the specification changes.

An object of the disclosure is to easily realize flow path switching valves of various specifications.

### Solution to Problem

A flow path switching valve according to a first aspect includes: a valve unit including: a valve main body in which a valve chamber is formed at an interior thereof, a first port and a second port through which a fluid flows in and out are formed at a wall surface forming the valve chamber, and a third port is formed at a bottom surface of the valve chamber; a first valve body disposed rotatably in the valve chamber, and in which a flow path is formed; a first flow path communicating with the first port; a second flow path provided parallel with the first flow path, with the valve main body interposed between the first flow path and the second flow path, and communicating with the second port; a branch part communicating with the third port and branching at least in two directions; a third flow path and a fourth flow path each coupled to the branch part; and a second valve body disposed in the branch part and which rotates in conjunction with the first valve body, wherein: a communication state of the first port, the second port, and the third port is selectively switched through the flow path of the first valve body, and a communication state of the third port, the third flow path, and the fourth flow path is switched by the second valve body.

**In** this flow path switching valve, the second valve body rotates in conjunction with the first valve body, and the second valve body can also rotate by rotating the first valve body. As a result, it is possible to easily realize flow path switching valves of various specifications.

According to a second aspect, in the flow path switching valve according to the first aspect, the first valve body is a ball valve body having a spherical surface, and is capable of switching between a state in which the first port and the third port communicate with each other and a state in which the second port and the third port communicate with each other, and the second valve body is a cylindrical valve body having a cylindrical surface, and is capable of switching between a state in which the third port and the third flow path communicate with each other and a state in which the third port and the fourth flow path communicate with each other.

In this flow path switching valve, the first valve body that is the ball valve body can switch between the state in which the first port and the third port communicate with each other and a state in which the second port and the third port communicate with each other. The second valve body that is the cylindrical valve can switch between the state in which the third port and the third flow path communicate with each other and the state in which the third port and the fourth flow path communicate with each other. As a result, a flow from the first flow path or the second flow path can flow to the third flow path or the fourth flow path according to the specification.

According to a third aspect, in the flow path switching valve according to the first aspect or the second aspect, a rotation drive part that is connected to the valve unit and rotates the first valve body and the second valve body is provided.

In this flow path switching valve, since the second valve body rotates in conjunction with the first valve body, the second valve body can also be rotated by rotating the first valve body by the rotation drive part. As a result, it is possible to easily realize flow path switching valves of various specifications.

According to a fourth aspect, in the flow path switching valve according to the third aspect, the first valve body and the second valve body are connected by a connecting shaft for transmitting a driving force of the rotation drive part.

In this flow path switching valve, since the first valve body and the second valve body are connected by the connecting shaft, the driving force of the rotation drive part is transmitted from the first valve body to the second valve body. As a result, the first valve body and the second valve body can be interlocked.

According to a fifth aspect, in the flow path switching valve according to the third aspect or the fourth aspect, with respect to one valve unit, another valve unit is overlapped and connected, and two first valve bodies and two second valve bodies in two valve units are rotated by one rotation drive part.

In this flow path switching valve, with respect to one valve unit, another valve unit is overlapped and connected. Then, the two first valve bodies and the two second valve bodies in the two valve units are rotated by the one rotation drive part. Therefore, the number of components and the cost can be reduced as compared with the case in which the rotation drive parts are respectively provided in the two valve units.

### Advantageous Effects of Invention

According to the disclosure, it is possible to easily realize flow path switching valves of various specifications.

### BRIEF DESCRIPTION OF DRAWINGS

Fig. 1 is a perspective view illustrating an overall configuration of a flow path switching valve according to an embodiment of the disclosure.
Fig. 2 is a sectional view illustrating the flow path switching valve according to the embodiment of the disclosure.
Fig. 3 is a perspective sectional view illustrating a state in which a first valve body and a second valve body are at a first angular position.
Fig. 4 is an enlarged perspective view illustrating the first valve body and the second valve body in the state of Fig. 3.
Fig. 5 is a perspective sectional view illustrating a state in which the first valve body and the second valve body are at a second angular position.
Fig. 6 is an enlarged perspective view illustrating the first valve body and the second valve body in Fig. 5.
Fig. 7 is a perspective sectional view illustrating a state in which the first valve body and the second valve body are at a third angular position.
Fig. 8 is an enlarged perspective view illustrating the first valve body and the second valve body in Fig. 7.
Fig. 9 is a perspective sectional view illustrating a state in which the first valve body and the second valve body are at a fourth angular position.
Fig. 10 is an enlarged perspective view illustrating the first valve body and the second valve body in Fig. 9.

### DESCRIPTION OF EMBODIMENTS

Hereinafter, modes for carrying out the disclosure will be described with reference to the drawings. In the drawings, components denoted by the same reference numerals mean the same or similar components. Overlapping descriptions and reference numerals in the embodiments described below may be omitted. The drawings used in the following description are all schematic, and dimensional relationships of respective elements, ratios of respective elements, and the like illustrated in the drawings do not necessarily coincide with actual ones. Dimensional relationships of the respective elements, ratios of the respective elements, and the like do not necessarily coincide among the plurality of drawings.

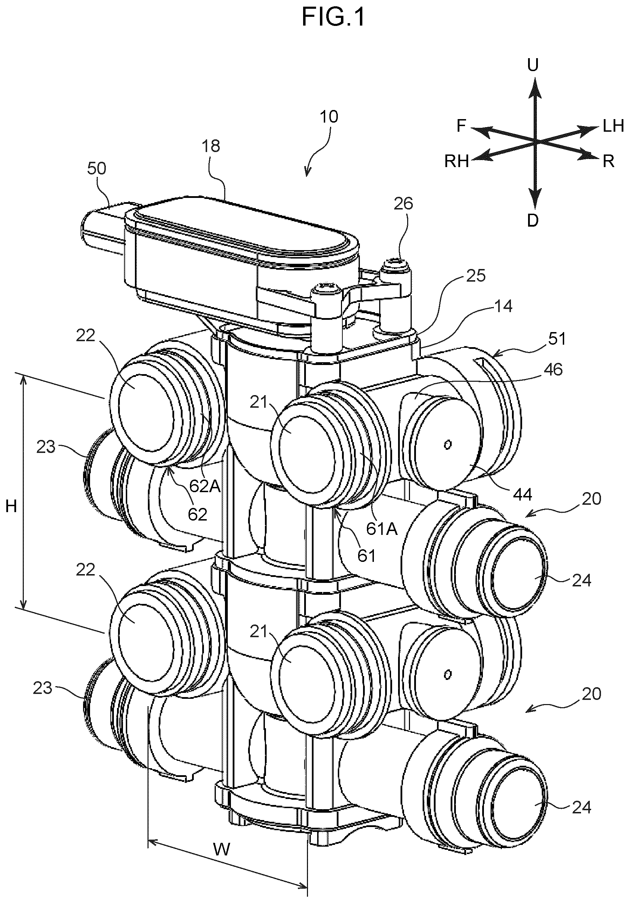

In the present specification, the description representing a position and direction such as up and down, left and right, front and back, and the like is based on the direction arrow display of Fig. 1, and does not refer to the position and direction in the actual use state. In Fig. 1, "U" indicates an upward direction (upper side), "D" indicates a downward direction (lower side), "LH" indicates a left direction (left side), "RH" indicates a right direction (right side), "F" indicates a front direction (front side), and "R" indicates a rear direction (rear side). An "up-down direction" means a direction of an arrow U and a direction of an arrow D. A "left-right direction" means a direction of an arrow LH and a direction of an arrow RH. A "front-rear direction" means a direction of an arrow F and a direction of an arrow R.

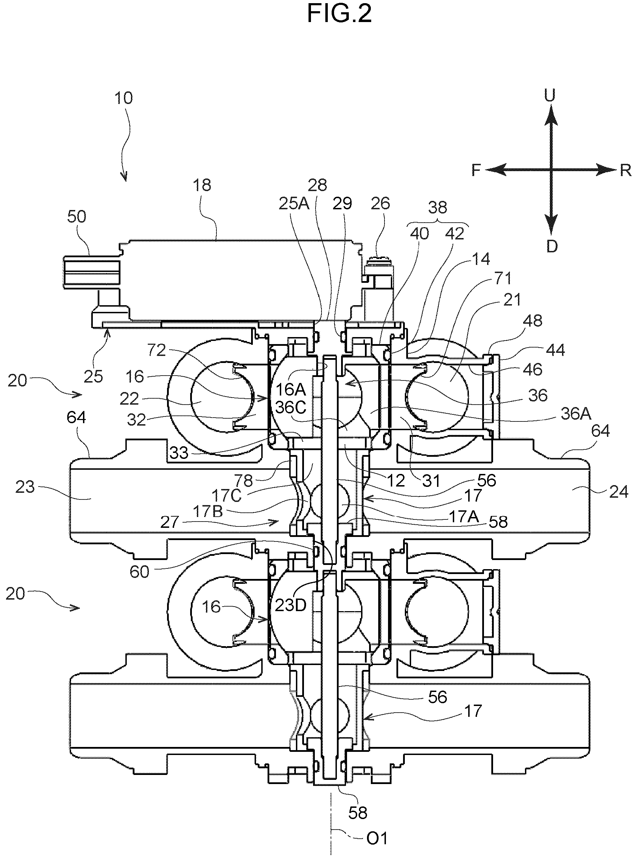

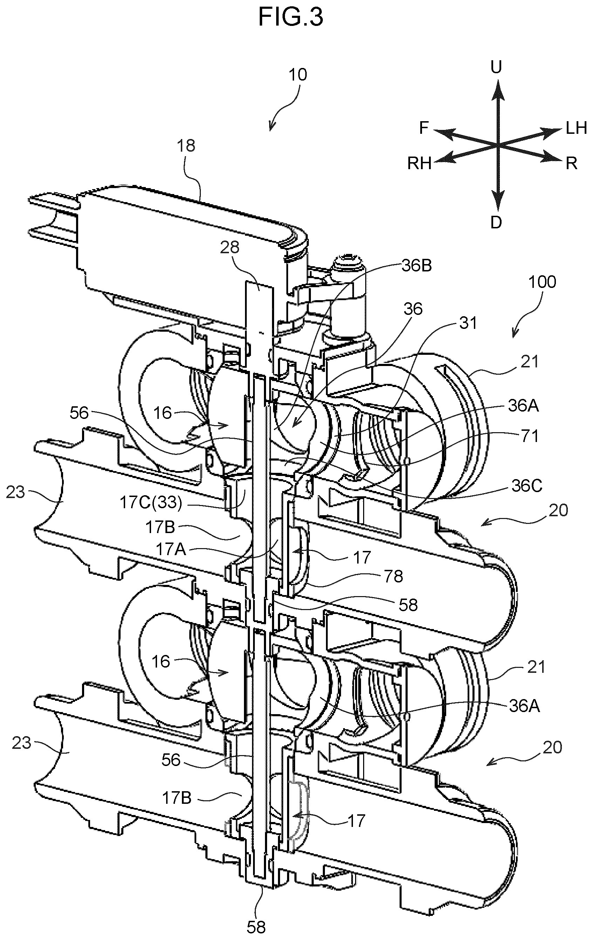

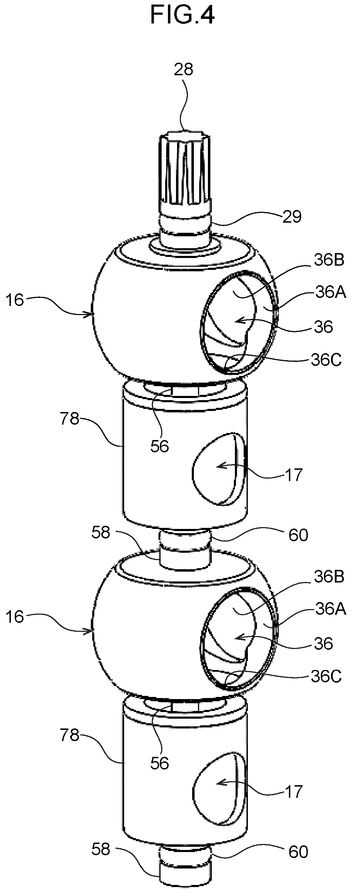

Fig. 1 is a perspective view illustrating an overall configuration of a flow path switching valve 10 according to an embodiment of the disclosure, and is drawn from an oblique rear viewpoint. In this flow path switching valve 10, two valve units 20 are overlapped and connected in the up-down direction. Fig. 2 is a sectional view of the flow path switching valve 10. Fig. 3 is a perspective sectional view of the flow path switching valve 10. Fig. 4 is an enlarged perspective view in which a portion of the first valve body and a portion of the second valve body are extracted from Fig. 3.

The flow path switching valve 10 is used as, for example, a rotary three-way valve that switches a flow path of a fluid flowing in an engine room or the like of an automobile. As illustrated in Figs. 1 to 3, the flow path switching valve 10 has a valve unit 20. The flow path switching valve 10 may further have a rotation drive part 18.

### [Valve Unit]

The valve unit 20 includes a valve main body 14, a first valve body 16, a first flow path 21, a second flow path 22, a branch part 27, a third flow path 23, a fourth flow path 24, and a second valve body 17. As described later, the valve unit 20 can switch, for example, between a state in which the first flow path 21 and the third flow path 23 communicate with each other and a state in which the second flow path 22 and the third flow path 23 communicate with each other. The valve unit 20 can switch between a state in which the third port 33 and the third flow path 23 communicate with each other and a state in which a third port 33 and the fourth flow path 24 communicate with each other.

### (Valve Main Body)

In Fig. 2, the valve main body 14 is made of, for example, a synthetic resin, and a valve chamber 12 is formed at an interior thereof. An upper direction of the valve chamber 12 is opened, and the first valve body 16 and a sealing part 38 to be described later are inserted from the upper direction. On a wall surface forming the valve chamber 12, for example, a first port 31 and a second port 32 which face each other and through which a fluid flows in and out are formed. As an example, the first port 31 is formed at a rear wall surface of the valve chamber 12, and the second port 32 is formed at a front wall surface of the valve chamber 12. That is, the first port 31 and the second port 32 face each other in the front-rear direction of the valve chamber 12. A third port 33 is formed at a bottom surface of the valve chamber 12.

### (First Valve Body)

The first valve body 16 is a ball valve body made of, for example, a synthetic resin, and is rotatably disposed in the valve chamber 12. An insertion hole 16A into which a valve shaft 28 in the rotation drive part 18 is inserted is formed in an upper part of the first valve body 16. The valve shaft 28 and the insertion hole 16A are engaged with each other around an axial direction of the valve shaft 28, and the rotation of the valve shaft 28 is transmitted to the first valve body 16. The insertion hole 16A penetrates, for example, to a flow path 36 of the first valve body 16.

In order to allow the first port 31, the second port 32, and the third port 33 of the valve main body 14 to selectively communicate with each other, in other words, in order to selectively switch the communication state of the first port 31, the second port 32, and the third port 33, the flow path (internal flow path) 36 is provided inside the first valve body 16.

Specifically, a lateral hole 36A leading from an outer periphery (side part) to the flow path 36 is formed in the first valve body 16. A pilot hole 36C leading from an outer periphery (lower part) to the flow path 36 is formed in the first valve body 16. In the first valve body 16, a lateral hole 36B joining from the outer periphery (side part) to the center of the lateral hole 36A is formed, for example, in a direction orthogonal to a rotation axis O1 (Fig. 2) of the first valve body 16 and orthogonal to the lateral hole 36A. By rotating the first valve body 16 by 90°, it is possible to switch between a state in which the first port 31 and the third port 33 communicate with each other and a state in which the second port 32 and the third port 33 communicate with each other. That is, the flow path 36 has the lateral holes 36A and 36B and the pilot hole 36C, and these holes communicate with each other.

According to the state of the first valve body 16, the lateral holes 36A and 36B can face the first port 31 or the second port 32. In any of the ports, in a state where the lateral holes 36A and 36B do not face each other, the first valve body 16 is in close contact with a seat member 40 described later and is closed.

Although not illustrated, a rib extending in a direction (up-down direction) toward the third port 33 is formed in the flow path 36 of the first valve body 16. The rib is, for example, a thin plate-shaped protrusion, and is formed, for example, on an inner wall on a far side of the lateral hole 36A in the flow path 36 of the first valve body 16.

In Fig. 2, sealing parts 38 for sealing between the first valve body 16 and each of the first port 31 and the second port 32 are respectively provided. The sealing part 38 has, for example, a seat member 40 and an O-ring 42. The seat member 40 is made of, for example, a synthetic resin, and is formed in an annular shape having openings corresponding to the first port 31 and the second port 32. The seat members 40 are respectively disposed around the first port 31 and the second port 32 on an inner wall surface (front and rear wall surfaces of the valve chamber 12) of the valve main body 14. The first valve body 16 is sandwiched between the two seat members 40, and is disposed so as to be rotatable and slidable while being in contact with each of the seat members 40.

A space between the seat member 40 and the valve main body 14 is sealed by the O-ring 42, for example, airtightly and watertightly. The O-ring 42 is attached to, for example, an O-ring groove (not illustrated) formed in the seat member 40.

As an example, polyphenylene sulfide (PPS) can be used for the valve main body 14 and the first valve body 16, fluororesin (PTFE) can be used for the seat member 40, and synthetic rubber can be used for the O-ring 42.

### (Rotation Drive Part)

In Fig. 2, the rotation drive part 18 is a device connected to the valve unit 20. The rotation drive part 18 rotates the first valve body 16 such that the communication state of the first port 31, the second port 32, and the third port 33 is selectively switched through the flow path of the first valve body 16. The rotation drive part 18 rotates the second valve body 17 such that the communication state of the third port 33, the third flow path 23, and the fourth flow path 24 is switched. The rotation drive part 18 is disposed above the valve main body 14 in the upper valve unit 20.

Specifically, for example, a bracket 25 is fixed onto the upper valve main body 14, and the rotation drive part 18 is fixed onto the bracket 25 using, for example, a screw 26. An upward opening in the valve chamber 12 of the upper valve main body 14 is closed by, for example, the bracket 25. In other words, the bracket 25 has a shape that closes the opening of the valve chamber 12. The bracket 25 is welded to the inside of the opening of the valve chamber 12 in a state of being inlay fitted.

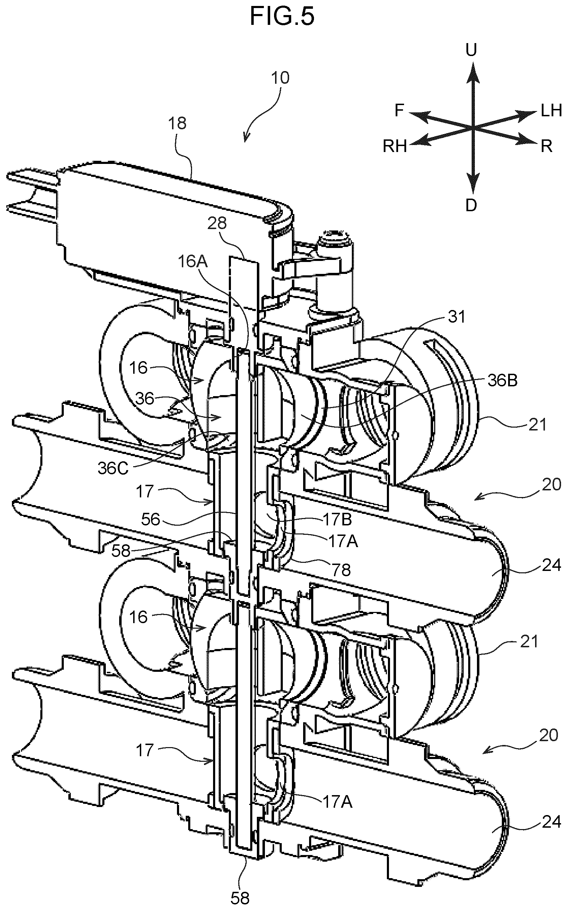

The rotation drive part 18 is, for example, a geared motor. The rotation drive part 18 is provided with, for example, a connector 50 to which wiring for communication with a control unit and power supply is coupled. The valve shaft 28 as an output shaft is coupled to the rotation drive part 18. The valve shaft 28 is inserted through a through-hole 25A formed in the bracket 25. An O-ring 29 or an X-ring (not illustrated) is attached to the valve shaft 28. The O-ring 29 or the X-ring ensures watertightness between the valve shaft 28 and the through-hole 25A. A lower end of the valve shaft 28 is inserted into the insertion hole 16A (Fig. 5) of the first valve body 16.

### (First Flow Path, Second Flow Path, Third Flow Path, Fourth Flow Path, And Branch Part)

The first flow path 21, the second flow path 22, the third flow path 23, the fourth flow path 24, and the branch part 27 are, for example, pipe parts integrally configured with the valve main body 14. In other words, the first flow path 21 is a first port, the second flow path 22 is a second port, the third flow path 23 is a third port, and the fourth flow path 24 is a fourth port.

The first flow path 21 is open at both ends, for example, and communicates with the first port 31 of the valve chamber 12. The first flow path 21 linearly extends, for example, in the left-right direction. The first port 31 is coupled to the middle of the first flow path 21. As a result, the first flow path 21 and the first port 31 are formed in a substantially T shape in plan view.

The second flow path 22 is provided parallel with the first flow path 21 with the valve main body 14 interposed therebetween, and has, for example, both ends opened and communicates with the second port 32. The second flow path 22 linearly extends, for example, in the left-right direction. The second port 32 is coupled to the middle of the second flow path 22. As a result, the second flow path 22 and the second port 32 are formed in a substantially T shape in plan view.

A female joint 51 is provided at one end of the first flow path 21. A female joint (not illustrated) similar to the female joint 51 is also provided at one end of the second flow path 22. Male joints 61 and 62 are respectively provided at the other ends of the first flow path 21 and the second flow path 22. The male joints 61 and 62 are configured to be able to be coupled to the female joint 51. Annular grooves 61A and 62A are formed at the outer peripheries of the male joints 61 and 62. For example, a pair of arc-shaped slits 51A are formed in the female joint 51. The male joints 61 and 62 are fitted into the female joint 51, and are prevented from coming off by fitting clips (not illustrated) into the grooves 61A and 62A through the slit 51A. The water-tightening of the coupling portion of each joint is performed by, for example, an O-ring (not illustrated). With such a joint structure, the first flow path 21 and the second flow path 22 of one valve unit 20 can be respectively connected and coupled to the first flow path 21 and the second flow path 22 of another valve unit 20. The joint structure is an example, and any other joint structure can be used.

In Fig. 2, a first protrusion part 71 protruding from the first port 31 side toward an inside of the first flow path 21 is provided at a coupling part with the first port 31 in the first flow path 21. The first protrusion part 71 is, for example, an arc-shaped projection formed along the opening of the first port 31 with respect to the first flow path 21. The range of the first protrusion part 71 is, for example, less than half the circumference of an inner peripheral surface of the first flow path 21 on the first port 31 side. One surface of the first protrusion part 71 in the left-right direction is a concave surface obtained by extending a part of an inner wall of the first flow path 21. In the illustrated example, the first protrusion part 71 is provided on the left side of the first port 31. The first protrusion part 71 may be provided on the right side of the first port 31, or may be provided on both left and right sides of the first protrusion part 71.

A second protrusion part 72 protruding from the second port 32 side toward an inside of the second flow path 22 is provided at a coupling part with the second port 32 in the second flow path 22. The second protrusion part 72 is, for example, an arc-shaped projection formed along the opening of the second port 32 with respect to the second flow path 22. The range of the second protrusion part 72 is, for example, less than half the circumference of an inner peripheral surface of the second flow path 22 on the second port 32. One surface of the second protrusion part 72 in the left-right direction is a concave surface obtained by extending a part of an inner wall of second flow path 22. In the illustrated example, the second protrusion part 72 is provided on the left side of the second port 32. The second protrusion part 72 may be provided on the right side of the second port 32, or may be provided on both left and right sides of the second protrusion part 72.

As illustrated in Figs. 1 and 3, for example, a sub flow path 46 closed by a lid body 44 may be provided at a position facing the first port 31 in the first flow path 21. A space between the lid body 44 and an end of the sub flow path 46 is sealed by welding or is water-tight by a sealing member such as an O-ring. The sub flow path 46 can also be used by removing the lid body 44. For example, a storage tank (not illustrated) can be coupled to the sub flow path 46. When the valve unit 20 is vertically overlapped, two sub flow paths 46 exist vertically. The two sub flow paths 46 can also be coupled to the storage tank provided with two coupling ports. In this case, the storage tank may have two storage chambers that correspond to the respective coupling ports and are partitioned from each other. As a result, fluids having different temperatures can be stored separately even in the same fluid.

Pumps (not illustrated) can be respectively attached to the female joint 51 or the male joint 61 of the first flow path 21 at a terminal end of the flow path switching valve 10 and the female joint or the female joint 62 of the second flow path 22 at a terminal end. The pump may be attached to the female joint 51 of the first flow path 21 in the upper valve unit 20. The pump may be attached to the female joint of the second flow path 22 in the upper valve unit 20. The pump can supply a fluid from the other device to the first flow path 21 or supply a fluid in the first flow path 21 to the other device. The pump can supply a fluid from the other device to the second flow path 22 or supply a fluid in the second flow path 22 to the other device.

In Fig. 2, the branch part 27 is a portion communicating with the third port 33 and branches in at least two directions. The third flow path 23 and the fourth flow path 24 are flow paths respectively coupled to the branch part 27. For example, the third flow path 23 extends forward from the branch part 27, and is opened on the side opposite to the branch part 27. The fourth flow path 24 extends rearward from the branch part 27, and is opened on the side opposite to the branch part 27. That is, the third flow path 23 and the fourth flow path 24 linearly extend in opposite directions from each other, for example. A terminal end of the third flow path 23 on the opening side protrudes forward from the second flow path 22, for example. A terminal end of the fourth flow path 24 on the opening side protrudes rearward from the first flow path 21, for example. For example, a male joint 64 capable of being coupled to a pipe to the other device is provided at the terminal end of each of the third flow path 23 and the fourth flow path 24 on the opening side.

For example, a through-hole 23D is formed in a bottom part of the valve main body 14 below the third port 33. A valve shaft 58 can pass through the through-hole 23D. A space between the valve shaft 58 and the through-hole 23D is water-tight by an O-ring 60. In a case in which the other valve unit is not overlapped on the lower side, a structure without the through-hole 23D may be adopted. Even when the through-hole 23D is provided, it may be configured to be closed by another member (for example, a closing part). For example, the closing part may include a temperature sensor (not illustrated). The temperature sensor is supported by, for example, the closing part, and is disposed such that a distal end thereof is positioned in the branch part 27 (second valve body 17). By using the temperature sensor, the temperature in the branch part 27 (second valve body 17), that is, in the third flow path 23 or the fourth flow path 24 can be accurately measured.

### (Second Valve Body)

The second valve body 17 is a cylindrical valve body having a cylindrical surface, for example, which is disposed in the branch part 27 and rotates in conjunction with the first valve body 16. Specifically, lateral holes 17A and 17B and an upper hole 17C are formed in the second valve body 17. The lateral hole 17B is formed, for example, in a direction orthogonal to the rotation axis O1 (Fig. 2) of the second valve body 17 and orthogonal to the lateral hole 17A. By rotating the second valve body 17, it is possible to switch between a state in which the third port 33 and the third flow path 23 communicate with each other and a state in which the third port 33 and the fourth flow path 24 communicate with each other.

A tubular sealing part 78 is provided between the branch part 27 and the second valve body 17. A through-hole communicating with each of the third flow path 23 and the fourth flow path 24 is formed in the sealing part 78. The through-hole is formed to have a larger diameter than the lateral holes 17A and 17B in order to suppress an increase in water flow resistance.

The upper hole 17C communicates with the third port 33 of the valve chamber 12. The lower side of the second valve body 17 is sealed by, for example, a support portion of the valve shaft 58, specifically, the O-ring 60. The valve shaft 58 is engaged with the second valve body 17 in a circumferential direction, and the second valve body 17 also rotates with the rotation of the valve shaft 58. The second valve body 17 and the valve shaft 58 may be integrally formed.

### [Overlapping of Valve Units]

In the present embodiment, the other valve unit 20 can be overlapped and connected to the side opposite to the rotation drive part 18 of one valve unit 20. A portion of the upper valve unit 20 overlapping the lower valve unit 20 is a lid that closes the valve chamber 12 of the lower valve unit 20. The closing structure is substantially the same as the closing structure of the valve chamber 12 by the bracket 25, and the bottom part of the upper valve main body 14 is welded in a state of being inlay fitted to the inside of the opening of the valve chamber 12 in the lower valve main body 14.

The other valve unit 20 may be overlapped and connected to one valve unit 20, and two first valve bodies 16 in two valve units 20 may be rotated by one rotation drive part 18. In this example, the valve shaft 28 of the upper valve unit 20 and the valve shaft 58 of the lower valve unit 20 are connected by a connecting shaft 56. The connecting shaft 56 passes through the inside of the upper first valve body 16 and the inside of the second valve body 17 to connect the upper and lower valve shafts 28 and 58. When the upper valve shaft 28 is rotationally driven by the rotation drive part 18, the rotation is transmitted to the lower valve shaft 58 via the connecting shaft 56, and the upper and lower first valve body 16 and second valve body 17 rotate in synchronization with each other. The upper and lower valve shafts 58 in the lower valve unit 20 are also connected by another connecting shaft 56. That is, the two connecting shafts 56 are disposed on the rotation axis O1, and the valve shaft 28 and the two valve shafts 58 are connected in series. In the present embodiment, as an example, in the upper and lower valve units 20, the angular positions of the lateral holes 16A and 16B of the first valve body 16 coincide with each other, and the lateral holes 17A and 17B of the second valve body 17 coincide with each other.

The rotation drive parts 18 may be respectively provided in the upper and lower valve units 20, and the rotation control of the first valve body 16 and the second valve body 17 may be performed separately.

In Fig. 1, a center-to-center distance W between an end of the first flow path 21 and an end of the second flow path 22 in one valve unit 20 may be equal to a center-to-center distance H between the ends of the first flow path 21 in an overlapping direction in a state where the other valve unit 20 is overlapped and connected to the one valve unit 20. That is, W = H may be satisfied.

### (Operation)

The present embodiment is configured as described above, and the operation thereof will be described below. In the flow path switching valve 10 according to the present embodiment, the communication state of the first port 31, the second port 32, and the third port 33 of the valve chamber 12 can be selectively switched through the flow path 36 of the first valve body 16 by rotating the first valve body 16 by the rotation drive part 18. The first port 31 and the second port 32 face each other with the valve chamber 12 interposed therebetween, and the lateral holes 36A and 36B are formed in directions orthogonal to each other in the first valve body 16 which is a ball valve body. Therefore, by rotating the first valve body 16 by 90°, it is possible to switch between a state in which the first port 31 and the third port 33 communicate with each other and a state in which the second port 32 and the third port 33 communicate with each other.

Since the first valve body 16 and the second valve body 17 which is a cylindrical valve body are connected via the connecting shaft 56 and the valve shaft 58, the driving force of the rotation drive part 18 is transmitted from the first valve body 16 to the second valve body 17. As a result, the first valve body 16 and the second valve body 17 can be interlocked. The second valve body 17 also has the lateral holes 17A and 17B formed in directions orthogonal to each other. The upper hole 17C of the second valve body 17 communicates with the third port 33. As a result, by rotating the second valve body 17 by 90°, it is possible to switch between a state in which the third port 33 and the third flow path 23 communicate with each other and a state in which the third port 33 and the fourth flow path 24 communicate with each other. As a result, a flow from the first flow path 21 or the second flow path 22 can flow to the third flow path 23 or the fourth flow path 24 according to the specification.

Here, an example of switching the flow path in the case of the illustrated specification will be described. When the first valve body 16 and the second valve body 17 are at an angular position illustrated in Figs. 3 and 4, the lateral hole 36A of the first valve body 16 communicates with the first port 31, and the lateral hole 17B of the second valve body 17 communicates with the third flow path 23. The lateral hole 36B of the first valve body 16 and the lateral hole 17A of the second valve body 17 are closed. Therefore, in this state, in each valve unit 20, the first flow path 21 and the third flow path 23 communicate with each other.

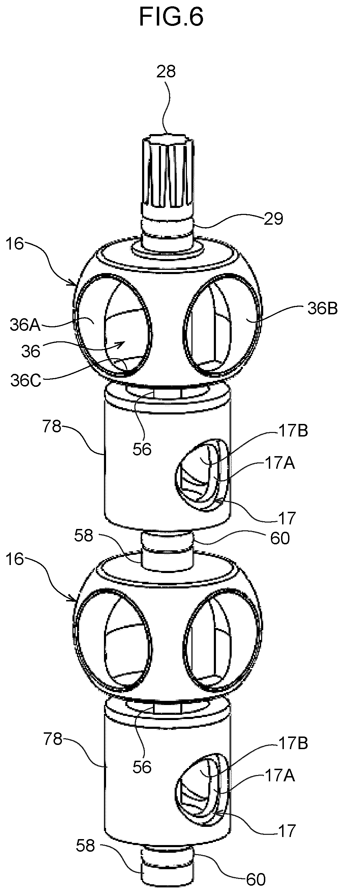

When the first valve body 16 and the second valve body 17 are at an angular position illustrated in Figs. 5 and 6, the lateral hole 36B of the first valve body 16 communicates with the first port 31, and the lateral hole 17A of the second valve body 17 communicates with the fourth flow path 24. The lateral hole 36A of the first valve body 16 and the lateral hole 17B of the second valve body 17 are closed. Therefore, in this state, in each valve unit 20, the first flow path 21 and the fourth flow path 24 communicate with each other.

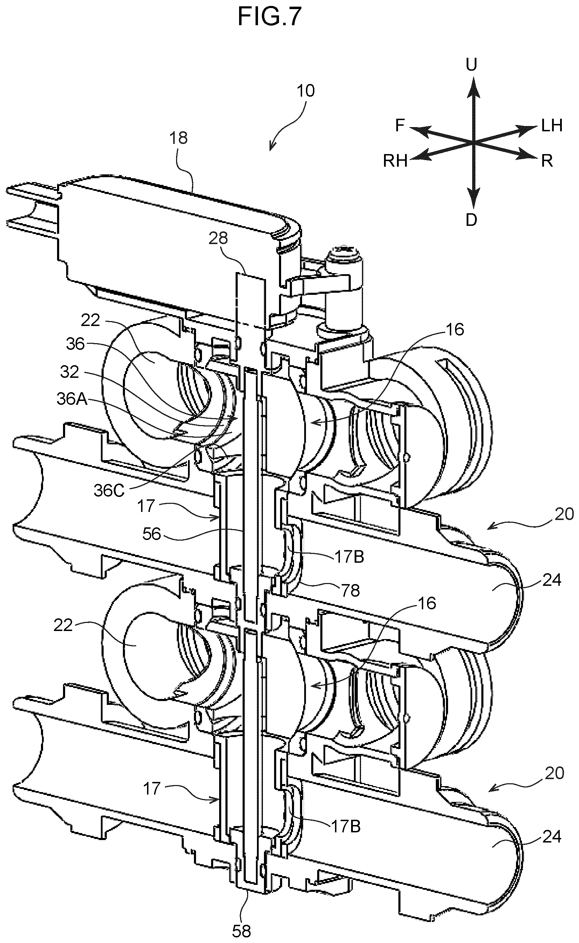

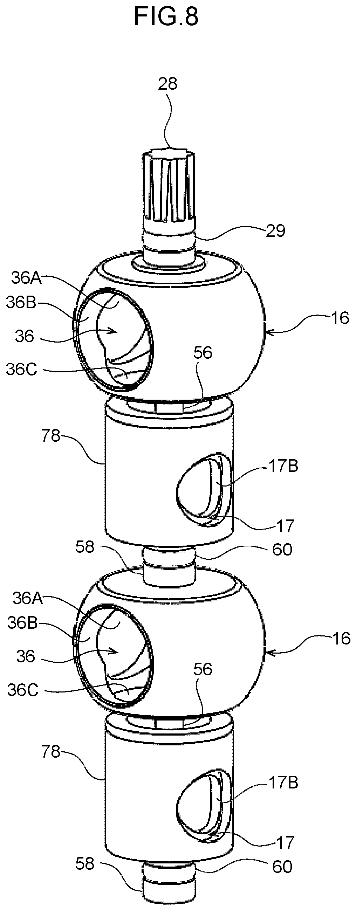

When the first valve body 16 and the second valve body 17 are at an angular position illustrated in Figs. 7 and 8, the lateral hole 36A of the first valve body 16 communicates with the second port 32, and the lateral hole 17B of the second valve body 17 communicates with the fourth flow path 24. The lateral hole 36B of the first valve body 16 and the lateral hole 17A of the second valve body 17 are closed. Therefore, in this state, in each valve unit 20, the second flow path 22 and the fourth flow path 24 communicate with each other.

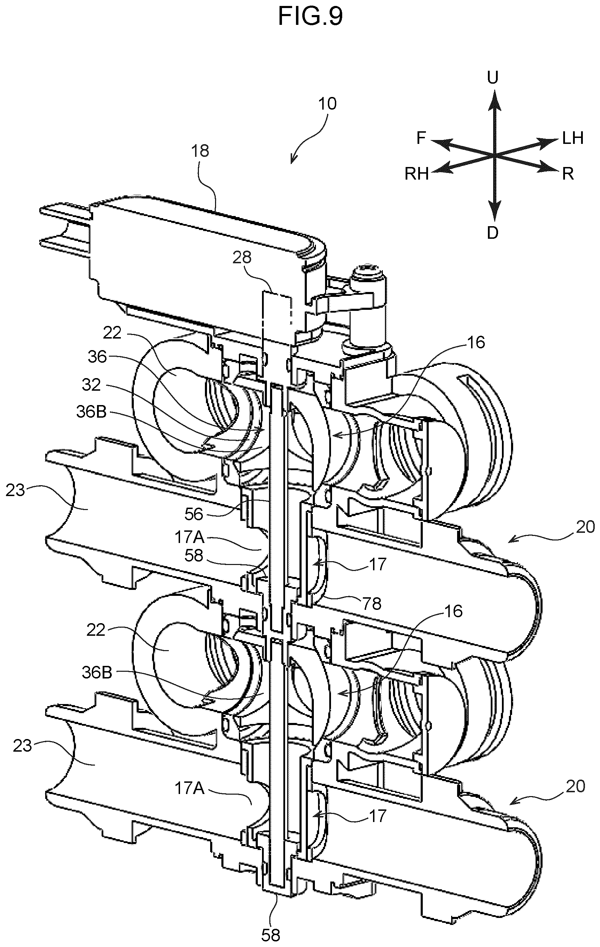

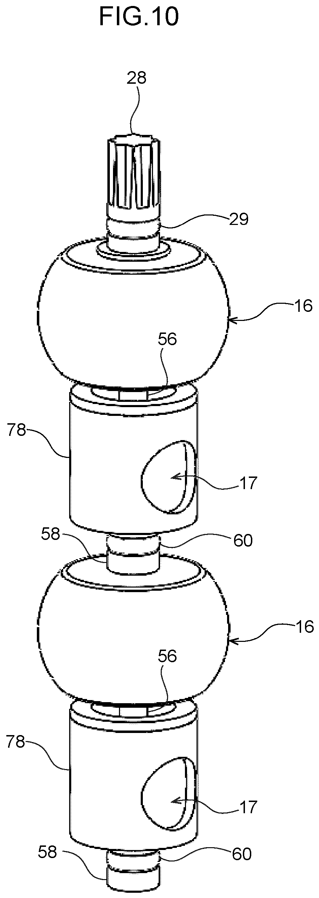

When the first valve body 16 and the second valve body 17 are at an angular position illustrated in Figs. 9 and 10, the lateral hole 36B of the first valve body 16 communicates with the second flow path 22, and the lateral hole 17A of the second valve body 17 communicates with the third flow path 23. The lateral hole 36A of the first valve body 16 and the lateral hole 17B of the second valve body 17 are closed. Therefore, in this state, in each valve unit 20, the second flow path 22 and the third flow path 23 communicate with each other.

Although not illustrated, since the first flow path 21 and the second flow path 22 of one valve unit 20 can be respectively connected and coupled to the first flow path 21 and the second flow path 22 of the other valve unit 20, it is possible to easily realize flow path switching valves of various specifications by combining the valve units 20. Specifically, the female joints 51 are provided at one ends of the first flow path 21 and the second flow path 22, and the male joints 61 and 62 are respectively provided at the other ends of the first flow path 21 and the second flow path 22. The male joints 61 and 62 can be respectively coupled to the female joints 51. Therefore, for example, the first flow paths 21 and the second flow paths 22 of one valve unit 20 and the other valve unit 20 can be easily coupled to each other.

In Fig. 1, for example, when W = H, in a case in which the other two overlapped valve units 20 are connected and coupled in the direction of the first flow path 21 and the second flow path 22 of the two overlapped valve units 20, not only the first flow paths 21 and the second flow paths 22 are coupled, but also the first flow path 21 and the second flow path 22 can be coupled. That is, the two valve units 20 can be coupled to each other by being rotated by 90°. Therefore, the degree of freedom in combining the valve units 20 can be further increased.

Furthermore, when the rib (not illustrated) extending in the direction toward the third port 33 is formed in the flow path 36 of the first valve body 16, a fluid flowing in the first valve body 16 can be rectified. When the first valve body 16 is assembled into the valve chamber 12, a direction of the first valve body 16 can be easily adjusted by applying a force to the rib.

When the first protrusion part 71 is provided at the coupling part with the first port 31 of the valve chamber 12 in the first flow path 21, the flow of the fluid in the first flow path 21 is disturbed by the first protrusion part 71. As a result, the fluid flowing through the first flow path 21 can be guided to the first port 31. When the second protrusion part 72 is provided at the coupling part with the second port 32 of the valve chamber 12 in the second flow path 22, the fluid flowing through the second flow path 22 can be guided to the second port 32 by disturbing the flow of the fluid in the second flow path 22 by the second protrusion part 72. **In** this way, an inflow of the fluid from the first flow path 21 and the second flow path 22 to the valve chamber 12 can be promoted.

Furthermore, the other valve unit 20 can be overlapped and connected to the side opposite to the rotation drive part 18 of one valve unit 20, such that the degree of freedom in combining the valve units 20 can be increased.

**In** a case in which a portion of one valve unit 20 overlapped with another valve unit 20 is the lid 68 that closes the valve chamber 12 of the other valve unit 20, when one valve unit 20 and another valve unit 20 are overlapped, another component for closing the valve chamber 12 of the other valve unit 20 is unnecessary. Therefore, it is possible to suppress an increase in the number of components and to increase workability when the valve units 20 are overlapped and connected.

**In** a case in which the two first valve bodies 16 and the two second valve bodies 17 in the two overlapped valve units 20 are rotated by one rotation drive part 18, the number of components and the cost can be reduced as compared with a case in which the rotation drive parts 18 are respectively provided in the two valve units 20.

As described above, according to the present embodiment, flow path switching valves of various specifications can be easily realized.

### [Other Embodiments]

Although examples of the embodiments of the disclosure have been described above, the embodiments of the disclosure are not limited to the above, and it is a matter of course that various modifications can be made without departing from the gist of the disclosure in addition to the above.

The female j oints 51 are respectively provided at one ends of the first flow path 21 and the second flow path 22, and the male joints 61 and 62 having a structure capable of being coupled to the female j oints 51 are respectively provided at the other ends of the first flow path 21 and the second flow path 22. However, such a joint structure may not be provided.

Although the concave part 23B is provided in the bent part 23A of the third flow path 23, the concave part 23B may not be provided. Although the rib is formed in the flow path 36 of the first valve body 16, such a configuration without the rib may be adopted.

It has been described that the first protrusion part 71 is provided at the coupling part with the first port 31 in the first flow path 21, and the second protrusion part 72 is provided at the coupling part with the second port 32 in the second flow path 22. However, either the first protrusion part 71 or the second protrusion part 72 may be provided, and the first protrusion part 71 and the second protrusion part 72 may not be provided.

Although the other valve unit 20 can be overlapped and connected to the side opposite to the rotation drive part 18 of one valve unit 20, another member may be interposed between the two valve units 20. Such connection need not be possible.

The center-to-center distance W between an end of the first flow path 21 and an end of the second flow path 22 in one valve unit 20 is equal to the center-to-center distance H (W = H) between the ends of the first flow paths 21 in the overlapping direction in a state where the other valve unit 20 is overlapped and connected to one valve unit 20, but the center-to-center distance W may be different from the center-to-center distance H. In the flow path switching valve, the valve units 20 are overlapped in two stages, but may be overlapped in three or more stages.

The branch part 27 communicates with the third port 33 and branches in at least two directions, but may branch in three directions or four directions, for example.

In the upper and lower valve units 20, the angular positions of the lateral holes 16A and 16B of the first valve body 16 coincide with each other, and the lateral holes 17A and 17B of the second valve body 17 coincide with each other, but the positions of the lateral holes may not coincide with each other depending on the specifications.

The disclosure of Japanese Patent Application No. 2022-145623 filed on September 13, 2022 is incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. A flow path switching valve comprising:
a valve unit including: a valve main body in which a valve chamber is formed at an interior thereof, a first port and a second port through which a fluid flows in and out are formed at a wall surface forming the valve chamber, and a third port is formed at a bottom surface of the valve chamber; a first valve body disposed rotatably in the valve chamber, and in which a flow path is formed; a first flow path communicating with the first port; a second flow path provided parallel with the first flow path, with the valve main body interposed between the first flow path and the second flow path, and communicating with the second port; a branch part communicating with the third port and branching at least in two directions; a third flow path and a fourth flow path each coupled to the branch part; and a second valve body disposed in the branch part and which rotates in conjunction with the first valve body, wherein:
a communication state of the first port, the second port, and the third port is selectively switched through the flow path of the first valve body, and
a communication state of the third port, the third flow path, and the fourth flow path is switched by the second valve body.

2. The flow path switching valve according to claim 1, wherein:
the first valve body is a ball valve body having a spherical surface, and is capable of switching between a state in which the first port and the third port communicate with each other and a state in which the second port and the third port communicate with each other, and
the second valve body is a cylindrical valve body having a cylindrical surface, and is capable of switching between a state in which the third port and the third flow path communicate with each other and a state in which the third port and the fourth flow path communicate with each other.

3. The flow path switching valve according to claim 1, further comprising: a rotation drive part that is connected to the valve unit and rotates the first valve body and the second valve body.

4. The flow path switching valve according to claim 3, wherein the first valve body and the second valve body are connected by a connecting shaft for transmitting a driving force of the rotation drive part.

5. The flow path switching valve according to claim 3, wherein:
with respect to one valve unit, another valve unit is overlapped and connected, and
two first valve bodies and two second valve bodies in two valve units are rotated by one rotation drive part.
